# NEUE EUROPÄISCHE PATENTSCHRIFT

(11) **EP 0 339 427 B2**
(45) Veröffentlichungstag und Bekanntmachung des Hinweises auf die Entscheidung über den Einspruch: **27.10.2010**
(45) Hinweis auf die Patenterteilung: 16.02.1994
(21) Anmeldenummer: 89106842.1
(22) Anmeldetag: 17.04.1989
(51) Int. Cl.: C09D 5/34, C09K 3/10

(54) **Verwendung von nichtionischen Celluloseethern in Fugendicht- bzw. Beschichtungsmassen**
Use of non-ionic cellulose ethers in grouting or coating materials
Usage d'éthers cellulosiques non ioniques dans des masses de jointoiement, ou des revêtements

(30) Priorität: 26.04.1988 DE 3814078
(43) Veröffentlichungstag der Anmeldung: 02.11.1989
(73) Patentinhaber: Henkel AG & Co. KGaA, 40589 Düsseldorf (DE)
(72) Erfinder: Loth, Helmut, D-4300 Essen 1 (DE); Helpenstein, Klaus, D-4050 Mönchengladbach (DE); Podola, Tore, D-4019 Monheim (DE); Knop, Bernhard, Dr., D-4019 Monheim-Blee (DE)

(56) Entgegenhaltungen:
- EP-A- 0 180 319
- EP-A- 0 248 366
- EP-A1- 0 180 319
- CS-A- 227 522
- CS-A- 227 522
- GB-A- 2 129 823
- NL-A- 276 712
- US-A- 3 554 942

## Beschreibung

Die Erfindung betrifft ein Verfahren zur Herstellung von Fugendichtungsmassen gemäß Anspruch 1.

Aus Ullmann, Enzyklopädie der technischen Chemie, 4. Auflage, Seite 208 - 209, ist bekannt, daß nichtionische Celluloseetherderivate wie Hydroxyethylcellulose (HEC), Hydroxyethyl-methylcellulose (HEMC) und Hydroxypropyl-methylcellulose (HPMC) in Kunststoffputzen zur Verbesserung des Wasserrückhaltevermögens, der Offenzeit, der Naßhaftung sowie des Andick- und Abbindeverhaltens eingesetzt werden. Weiterhin erwähnt die DE-C 36 19 142 den Einsatz von wasserlöslichen Cellulosederivaten als Hilfsmittel beim mechanischen Glätten von noch nicht erhärteten Oberflächen von pastösen Materialien, insbesondere Fugendichtmassen, z.B. auf Basis von Polyacrylaten.

In der CS-A-227522 wird eine wäßrige Dispersion von Polyacrylaten und Vinyl-Polymeren beschrieben. Sie besteht zu 18 bis 53 % aus Wasser, zu 18 bis 40 % aus dispergierten Copolymeren, zu 2 bis 10 % aus Ethylenglykol, zu 0,15 bis 0,5 % aus Methylhydroxypropylcellulose und gegebenenfalls zu 60 % aus pulverförmigen anorganischen Füllstoffen und bis zu 7 % aus sonstigen Zusätzen. Die gleichzeitige Zugabe von Ethylenglykol und Methylhydroxypropylcellulose hat einen synergistischen Effekt bezüglich der Beständigkeit gegenüber tiefen Temperaturen. Die Dispersion eignet sich zur Herstellung von Klebstoffen, Kitten und Farben.

Übliche bekannte Formulierungen von Fugendicht- und Beschichtungsmassen werden üblicherweise nach der Applikation mit Glättwasser oder Wasser/Netzmittelgemischen, z.B. gemäß DE-C 36 19 142, geglättet. Die Anwendung von Glättmitteln ermöglicht die Ausbildung sowohl technisch als auch optisch einwandfreier Anschlüsse zu angrenzeden Baukörpern sowie die Egalisierung von Fehlstellen in den Oberflächen dieser Massen. Durch Anreicherung von den im Glättmittel enthaltenden Netzmitteln wird der Gleitwiderstand an der Oberfläche der Dichtmittel herabgesetzt und der Glättvorgang als solcher ermöglicht. Durch die Anreicherung von Netzmitteln können unter bestimmten Voraussetzungen Rezepturbestandteile an der Oberfläche der Massen emulgiert werden; da dadurch die Zusammensetzung der Masse an der Oberfläche verändert wird, können die technischen Eigenschaften der Dichtmittel beeinträchtigt werden. Ebenfalls nachteilig kann sich die Verarmung von Bestandteilen der Masse an der Oberfläche auswirken.

Die Erfindung ist auf ein Verfahren zur Herstellung von Fugendichtungsmassen gemäß Anspruch 1 gerichtet. Die erfindungsgemäß hergestellten Fugendichtungsmassen weisen bei ausgezeichneten Eigenschaften wie Elastizitätsmodul, Bruchdehnung und Rückstellvermögen ein verbessertes Gesamtglättverhalten und gleichzeitig eine erheblich verbesserte Migrationsbeständigkeit von Rezepturbestandteilen in die Oberfläche der Massen gegenüber den bekannten Formulierungen auf. Die Verwendung von nichtionischen Celluloseethern aus der von Hydroxyethyl-, Hydroxyethyl-methyl-, Hydroxypropyl-methyl- und Hydroxypropylcellulose gebildeten Gruppe mit Viskositäten nach Brookfield in 2 %-iger wäßriger Lösung bei 20°C von mindestens 3000, insbesondere mindestens 5000 mPa.s, als Zusätze zu Fugendicht- massen auf Basis von wäßrigen Dispersionen von Polyacrylaten bzw. Acrylat-Copolymeren führt zur Verbesserung der Streichfähigkeit und des Glättverhaltens von noch nicht erhärteten Oberflächen dieser Massen.

Ein wesentlicher und unerwarteter Vorteil der erfindungsgemäß hergestellten Fugendicht- massen ist weiterhin in dem sogenannten Auswaschverhalten zu sehen, d.h. die aufgetragene und noch nicht getrocknete Masse bleibt auch bei der Einwirkung von Wasser, z.B. Regenwasser, für einen längeren Zeitraum beständig.

Gemäß einer bevorzugten Ausführungsform der Erfindung sind die nichtionischen Celluloseether aus der von Hydroxyethyl-, Hydroxyethyl-methyl-, Hydroxypropyl-methyl- und Hydroxypropylcellulose gebildeten Gruppe mit Viskositäten nach Brookfield in 2 %-iger wäßriger Lösung bei 20°C von mindestens 3000, insbesondere mindestens 5000 mPa.s, in einer Menge von 0,4 bis 6,0 insbesondere 0,6 bis 5,0 Gew.-%, bezogen auf den Feststoffgehalt der Dispersion, enthalten.

Die in den erfindungsgemäß hergestellten Fugendicht-massen enthaltenen wäßrigen Dispersionen von Polyacrylaten bzw. Acrylat-Copolymeren weisen bevorzugt Feststoffgehalte von 40 bis 70, insbesondere 45 bis 65 Gew.-%, auf. Ihr pH-Wert sollte mindestens 7, insbesondere 8 bis 9 betragen und wird, falls erforderlich, auf diese Werte eingestellt.

Weiterhin können in den erfindungsgemäß hergestellten Fugendicht- massen Füllstoffe in einer Menge von 0 bis 60, insbesondere 2 bis 60 Gew.-%, bezogen auf die Gesamtmasse der Fugendicht- massen, enthalten sein. Derartige Massen weisen, wenn sie keine oder nur sehr wenig Füllstoffe enthalten, eine hohe Transparenz auf.

Gemäß einer weiteren vorteilhaften Ausführungsform der Erfindung enthalten die erfindungsgemäß hergestellten Fugendichtmassen als Weichmacher chlorierte Kohlenwasserstoffe, insbesondere chlorierte Paraffine, und als Netzmittel nichtionische Tenside. Bevorzugt sind handelsübliche chlorierte Paraffine mit einer Kettenlänge von etwa 10 bis 18 Kohlenstoffatomen und einem Chlorgehalt von etwa 40 bis 70 Gew.-%.

Die in den Fugendicht- massen enthaltenen wäßrigen Dispersionen von Polyacrylaten bzw. Acrylat-Copolymeren sowie die gegebenenfalls vorhandenen Pigmente, Weichmacher, Netzmittel, Entschäumer, Dispergierhilfsmittel sowie Konservierungs- und Alterungsschutzmittel sind handelsübliche Produkte, die dem Fachmann auf dem Gebiet der Fugendicht- massen für Bauzwecke bekannt sind.

Auch die erfindungsgemäß einzusetzenden nichtionischen Celluloseether der obengenannten Spezifikation sind handelsübliche Produkte.

Die Erfindung wird im folgenden anhand bevorzugter Ausführungsbeispiele näher erläutert.

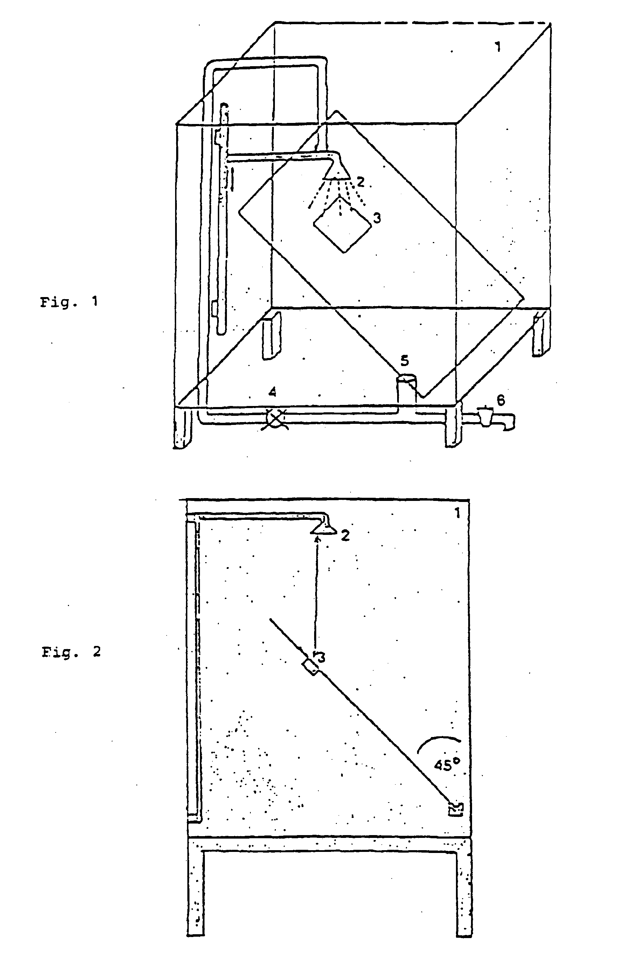

Die in den Beispielen beschriebenen Massen sowie weitere, zu Vergleichszwecken hergestellte Massen wurden einem Auswaschungstest unterworfen, wobei eine Beregnungsapparatur gemäß Fig. 1 verwendet wurde; die gleiche Apparatur ist in Fig. 2 In Seitenansicht gezeigt.

Die Beregnungsapparatur bestand aus einem Gehäuse aus durchsichtigem Kunststoff mit den Abmessungen: Höhe 70 cm, Breite 60 cm und Tiefe 60 cm. Sie umfaßte ein Gehäuse 1, einen Brausenkopf 2, eine Probenschale 3, eine Pumpe 4, einen Bodenablauf 5 und einen Absperrhahn 6 für den Ablauf. Die Probenschale bestand aus einem Gefäß der Abmessung 7 x 7 cm und wies eine Tiefe von 2,5 cm auf. Bei dem Brausenkopf handelte es sich um eine übliche Handbrause, wie sie zur Körperpflege verwendet wird und die so eingestellt war, daß eine gleichmäßige Beregnung der Probe erfolgte. Der Abstand zwischen Probe 3 und Brausenkopf 2 betrug 30 cm.

Die Apparatur wurde mit demineralisiertem Wasser betrieben, wobei durch die Pumpe ein Überdruck von etwa 0,4 bar erzeugt wurde. Der Wasserdurchsatz betrug 300 l/h. Das Besprühen mit Wasser wurde 5 Minuten, jeweils 1 min nach dem Einfüllen und Glattstreichen der Oberfläche der zu prüfenden Massen, vorgenommen. Die Auswaschung (in Gew.-%) wurden durch Differenzwägung vor und nach dem Beregnen bestimmt.

Die in den Beispielen beschriebenen Massen wurden weiterhin einem Test hinsichtlich ihres Glätteverhaltens unterzogen. Dieser Test wurde von 7 unabhängig arbeitenden Personen so durchgeführt, daß nach Auftragen eines 30 cm langen Massenstrangs auf eine glatte, ebene, dunkle Unterlage die Masse mit Spatel und Fingern geglättet wurde. Das Glätteverhalten wurde nach einer Notenskala von 1 (= sehr gut) bis 6 (= ungenügend) beurteilt.

### Beispiel 1

In einem Planetenmischer wurden die folgenden Bestandteile während etwa 45 Minuten intensiv gemischt:
1750 g wäßrige, handelsübliche Polybutylacrylesterdispersion (ungefähr 62 % Feststoff), einem pH-Wert von 8,8 - 8,5, einer Glasübergangstemperatur Tg -50°C, einer Viskosität von etwa 250 mPa.s bei 23°C und einer mittleren Teilchengröße von 0,4 µm,
250 g Chlorparaffin (C₁₂-C₁₄, 49 % Chlor),
2800 g Bariumsulfat (Handelsprodukt: Schwerspat EWO),
100 g Titandioxid (Handelsprodukt KRONOS RN 56),
25 g Natriumcarbonat (techn. reine Handelsware),
25 g Ethylenoxidaddukt (ungefähr 9,5 EO) an Nonylphenol,
5 g handelsübliches halogeniertes Konservierungsmittel,
37 g Hydroxyethylcellulose mit einer Viskosität von etwa 4000 mPa.s einer 1 %-igen, wäßrigen Lösung bei 20°C und einem Hydroxyethylgruppengehalt von 55 Gew.-%, Handelsname: Natrosol 250 HHR.

Diese Mischung wurde in 310 ml Kunststoffkartuschen abgefüllt und war wenigstens ein Jahr bei Temperaturen bis 35 °C lagerstabil.

| | |
|---|---|
| Verarbeitbarkeit nach DIN 52456 (Bohrung 4 mm, 2 bar Druck, Prüfvolumen 200 ml): | 2260 g/min |
| Glättverhalten: | gut |
| Auswaschung: | 1 % Verlust |

Bei einem Zusatz von insgesamt 50 g derselben Hydroxyethylcellulose wurden folgende Ergebnisse gefunden:

| | |
|---|---|
| Verarbeitbarkeit nach DIN 52456: | 1300 g/min |
| Glättverhalten: | sehr gut |
| Auswaschung: | 0,3 % Verlust |

### Beispiel 2

In einem Planetenmischer wurden die wie in Beispiel 1 aufgeführten Bestandteile während etwa 45 Minuten intensiv gemischt, wobei jedoch anstelle der Hydroxyethylcellulose mit 4000 mPa.s: 20 g einer Hydroxypropylcellulose mit einer Viskosität von etwa 5000 mPa.s einer 2 %-igen, wäßrigen Lösung bei 20 °C und einem Hydroxypropylgruppengehalt von 70 %, Handelsname Klucel M eingesetzt wurden.

Diese Mischung wurde in 310 ml Kunststoffkartuschen abgefüllt und war wenigstens bei Temperaturen bis 35 °C lagerstabil.

| | |
|---|---|
| Verarbeitbarkeit nach DIN 52456, gemessen wie im Beispiel 1: | 2100 g /min |
| Glättverhalten: | gut |
| Auswaschung: | 5 % Verlust |

### Beispiel 3

In einem Planetenmischer wurden die wie in Beispiel 1 aufgeführten Bestandteile während etwa 45 Minuten intensiv gemischt, wobei jedoch anstelle der Hydroxyethylcellulose mit auf 4000 mPa.s: 37 g einer Methylhydroxypropylcellulose mit einer Viskosität von etwa 20 000 mPa.s einer 2 %-igen, wäßrigen Lösung bei 20°C und einem Hydroxypropylgruppengehalt von 3,2 Gew.-%, Handelsname: Culminal MHPC 20000 PR
eingesetzt wurden.

Diese Mischung wurde in 310 ml Kunststoffkartuschen abgefüllt und war wenigstens ein Jahr bei Temperaturen bis 35 °C lagerstabil.

| | |
|---|---|
| Verarbeitbarkeit nach DIN 52456, gemessen wie im Beispiel 1: | 2870 g/min |
| Glättverhalten: | gut |
| Auswaschung: | 3.5 % Verlust |

### Beispiel 4

In einem Planetenmischer wurden die folgenden Bestandteile während etwa 45 Minuten intensiv gemischt.
4700 g wäßrige Dispersion eines Polyacrylsäurebutylesters mit geringen Mengen einpolymerisierten Acrylnitrils (60 % Feststoffgehalt), pH-Wert etwa 5 - 6,
52 g Ethylenoxidaddukt (ungefähr 9,5) an Nonylphenol
25 g handelsübliches Silikon-KW-Entschäumergemisch
13 g handelsübliches phenolisches Konservierungsmittel (Parmetol, Schülke-Mayr, Hamburg)
102 g disperse Kieselsäure (Handelsprodukt HDK V 15, Wacker-Chemie)
36 g Ammoniaklösung (25 %-ig)
52 g Chlorparaffin (C₁₀-C₁₄, 49 % Chlor)
18 g einer Hydroxyethylcellulose mit einer Viskosität von etwa 4000 mPa.s einer 1 %-igen, wäßrigen Lösung und einem Hydroxyethylgruppengehalt von 55 Gew.-%, Handelsname: Natrosol 250 HHR.

Diese Mischung wurde in 310 ml Kunststoffkartuschen abgefüllt und war wenigstens ein Jahr bei Temperaturen bis 35 °C lagerstabil.

| | |
|---|---|
| Verarbeitbarkeit nach DIN 52456, gemessen wie in Beispiel 1: | 3700 g/min |
| Glättverhalten: | gut |
| Auswaschung: | 4,5 % Verlust |

### Beispiel 5

In einem Planetenmischer wurden die folgenden Bestandteile während etwa 45 Minuten intensiv gemischt:
2795 g wäßrige, handelsübliche Dispersion eines Acrylsäureester-Styrol-Copolymeren (ungefähr 50 % Feststoff) mit einem pH-Wert von etwa 8, einer Viskosität von 1200 mPa.s bei 23 °C und einer mittleren Teilchengröße von ca. 0,1 um (anionischer Dispersionstyp)
180 g Chlorparaffin ((C₁₀-C₁₂)-Kettenlänge, 40 % Chlor)
1600 g Bariumsulfat (Schwerspat C 11, Sachtleben)
150 g Titandioxid (KRONOS RN 56)
5 g Natriumsalz von Polyacrylsäure (Dispex N 40)
100 g Formalin (30 % Formaldehydlösung)
120 g Phthalsäure(bis-methylcyclohexanyl)ester
50 g Hydroxyethylcellulose mit einer Viskosität von etwa 400 mPa.s einer 1 %-igen, wäßrigen Lösung bei 20 °C und einem Hydroxyethylgruppengehalt von 55 Gew.-%, Handelsname: Natrosol 250 HHR.

Diese Mischung wurde in 310 ml Kunststoffkartuschen abgefüllt und war wenigstens ein Jahr bei Temperaturen bis 35 °C lagerstabil.

| | |
|---|---|
| Verarbeitbarkeit nach DIN 52456, gemessen wie im Beispiel 1: | 1500 g/min |
| Glättverhalten: | sehr gut |
| Auswaschung: | 0,5 % Verlust |

### Vergleichsversuche

a) Beispiel 1 wurde unter Weglassung der Hydroxyethylcellulose wiederholt: 23 % Auswaschung
b) Beispiel 1 wurde wiederholt, wobei anstelle der Hydroxyethylcellulose Carboxylmethylcellulose (DS 0,8, Viskosität 400 mPa.s in 2 %-iger, wäßriger Lösung bei 20 °C eingesetzt wurden: 27 % Auswaschung
c) Beispiel 4 wurde unter Weglassung von Hydroxyethylcellulose wiederholt: 20 % Auswaschung.

## Patentansprüche

1. Verfahren zur Herstellung von Fugendichtungsmassen durch Mischen von
a) wäßrigen Dispersionen von Polyacrylaten bzw. Acrylat-Copolymeren,
b) nichtionischen Celluloseethern aus der von Hydroxyethyl-, Hydroxyethyl-methyl-, Hydroxypropyl-methyl- und Hydroxypropylcellulose gebildeten Gruppe mit Viskositäten nach Brookfield in 2 %iger wäßriger Lösung bei 20 °C von mindestens 3000, insbesondere mindestens 5000 mPas,
sowie gegebenenfalls
c) üblichen Zusätzen wie Pigmente, Netzmittel, Weichmacher (Extender), Entschäumer, Dispergierhilfsmittel sowie Konservierungs- und Alterungsschutzmittel.

2. Verfahren zur Herstellung nach Anspruch 1, **dadurch gekennzeichnet, daß** die wäßrigen Dispersionen von Polyacrylaten Feststoffgehalte von 40 bis 70, insbesondere von 45 bis 65 Gew.-% aufweisen.

## Claims

1. A method for producing joint sealing compounds by mixing
a) aqueous dispersions of polyacrylates or acrylate copolymers,
b) non-ionic cellulose ethers from the group formed by hydroxyethyl, hydroxyethylmethyl, hydroxypropylmethyl and hydroxypropyl cellulose with Brookfield viscosities in 2% aqueous solution at 20°C of at least 3,000 mPa.s and, particularly at least 5,000 mPa.s,
and optionally
c) typical additives such as pigments, wetting agents, plasticizers (extenders), foam inhibitors, dispersants, as well as preservatives and anti-agers.

2. The production method according to claim 1, **characterized in that** the aqueous dispersions of polyacrylates have solids content from 40 to 70, in particular from 45 to 65% by weight.

## Revendications

1. Procédé pour la fabrication de produits étanches de jointoiement par mélange :
a) de dispersions aqueuses de polyacrylates, respectivement de copolymères d'acrylate ;
b) d'éthers cellulosiques non ioniques du groupe formé par l'hydroxyéthylcellulose, l'hydroxyéthylméthytcellulose, l'hydroxypropylméthylcellulose et l'hydroxypropylcellulose, possédant des viscosités minimales de 3000, en particulier d'au moins 5000 mPas, selon Brookfield, dans une solution aqueuse à 2 % à une température de 20 °C ;
et de manière facultative
c) d'additifs habituels tels que des pigments, des agents mouillants, des plastifiants (agents d'allongement), des agents s'opposant à la formation de mousse, des adjuvants de mise en dispersion, ainsi que des agents de conservation et de protection contre le vieillissement.

2. Procédé de fabrication selon la revendication 1, **caractérisé en ce que** les dispersions aqueuses de polyacrylates présentent des teneurs en substances solides s'élevant de 40 à 70, en particulier de 45 à 65 % en poids.
